# FASCICULE DE BREVET EUROPEEN

(11) **EP 0 346 202 B1**
(45) Date de publication et mention de la délivrance du brevet: **19.05.1993**
(21) Numéro de dépôt: 89401541.1
(22) Date de dépôt: 05.06.1989
(51) Int. Cl.: G02B 26/02

(54) **Dispositif de commutation optique**
Einrichtung zum optischen Schalten
Device for optical switching

(30) Priorité: 06.06.1988 FR 8807486
(43) Date de publication de la demande: 13.12.1989
(73) Titulaire: PHOTONETICS S.A., 78160 Marly le Roi (FR)
(72) Inventeur: Arditty, Hervé Jacques, F-78160 Marly Le Roi (FR); Desforges, François Xavier, F-78330 Fontenay Le Fleury (FR)
(74) Mandataire: Michelet, Alain

(56) Documents cités:
- DE-C- 1 158 150
- FR-A- 2 166 376
- GB-A- 2 189 047
- PATENT ABSTRACTS OF JAPAN, vol. 9, no. 83 (P-348)(1806), 12 avril 1985;& JP-A-59212805

## Description

La présente invention concerne un dispositif de commutation optique bistable.

Le développement des transmissions par fibres optiques implique la conception d'un certain nombre de composants qui en liaison avec les fibres optiques sont susceptibles de constituer des systèmes complets et opérationnels de transmission d'informations. Les dispositifs de commutation font partie de ces ensembles. Ils permettent par exemple de réaliser un codage optique d'une information et de permettre sa transmission par une fibre optique.

Des dispositifs cherchant à remplir cette même fonction ont été décrits, par exemple le brevet français FR 2 548 394 décrit un système de commandes optoélectroniques dans lequel une fibre optique est associée à un commutateur et coopère avec des moyens permettant de modifier les conditions optiques de transfert de la lumière dans le commutateur. Ce dispositif de commandes est particulièrement destiné au poste de conduite des véhicules automobiles.

Le document anglais GB 2 189 047 décrit un interrupteur à fibres optiques dans lequel un signal provenant dune première fibre opti.que est dirigé vers un réflecteur mobile dont la position détermine le renvoi éventuel du signal vers une deuxième fibre optique éventuellement confondue avec la première.

Le document US 4 315 147 décrit un interrupteur optique remplissant une fonction analogue. Il prévoit le déplacement d'un composant optique par rapport à une ou plusieurs fibres. Ce déplacement est commandé manuellement par l'intermédiaire d'un bouton-poussoir.

Enfin, le document US 4 607 161 concerne également un dispositif remplissant la fonction de renvoi éventuel du signal reçu dune fibre optique vers une autre dans lequel le composant optique mobile est porté par un élément mécanique partiellement flexible.

L'objectif de la présente invention est la réalisation d'un dispositif de commutation optique bistable qui soit à la fois simple et très fiable.

Plus précisément, c'est un objectif que de concevoir un produit résistant et dont le fonctionnement ne soit pas altéré dans le temps.

En effet, il a été constaté que la conception des dispositifs de commutation de l'art antérieur est le plus souvent dérivée des produits connus de longue date dans le domaine électrique alors que les conditions qu'ils doivent satisfaire ne sont pas identiques. Dans le cas des contacteurs électriques il est nécessaire de produire la mise en contact ou la séparation de deux pièces métalliques; au contraire dans le cas d'un commutateur optique c'est la position d'un élément optique par rapport à une ou plusieurs fibres qui doit être réalisée et/ou modifiée.

A cet effet, le dispositif de commutation optique bistable de l'invention comporte un composant optique qui peut être déplacé d'une position d'équilibre stable à une autre par rapport à au moins une fibre optique par l'action d'une première pièce mobile. Dans l'une de ces positions stables le composant optique est actif alors que dans l'autre il est inactif. Ce dispositif de commutation comporte un boîtier, des moyens de fixation des fibres optiques sur le boîtier, une deuxième pièce mobile par rapport au boîtier portant le composant optique et une lame élastique de forme approximativement semi-circulaire qui relie la deuxième pièce mobile à la première, chacune d'elles étant liée à la lame élastique au voisinage de l'une des extrémités du demi cercle.. Selon l'invention, la deuxième pièce mobile est mobile autour d'un axe de rotation solidaire du boîtier. Elle est rigide et constitue un élément distinct de la lame élastique.

Dans un mode de réalisation préféré, le dispositif de commutation bistable comporte deux butées solidaires du boîtier, situées de part et d'autre de la pièce mobile qui définissent les positions d'équilibre stables de cette pièce.

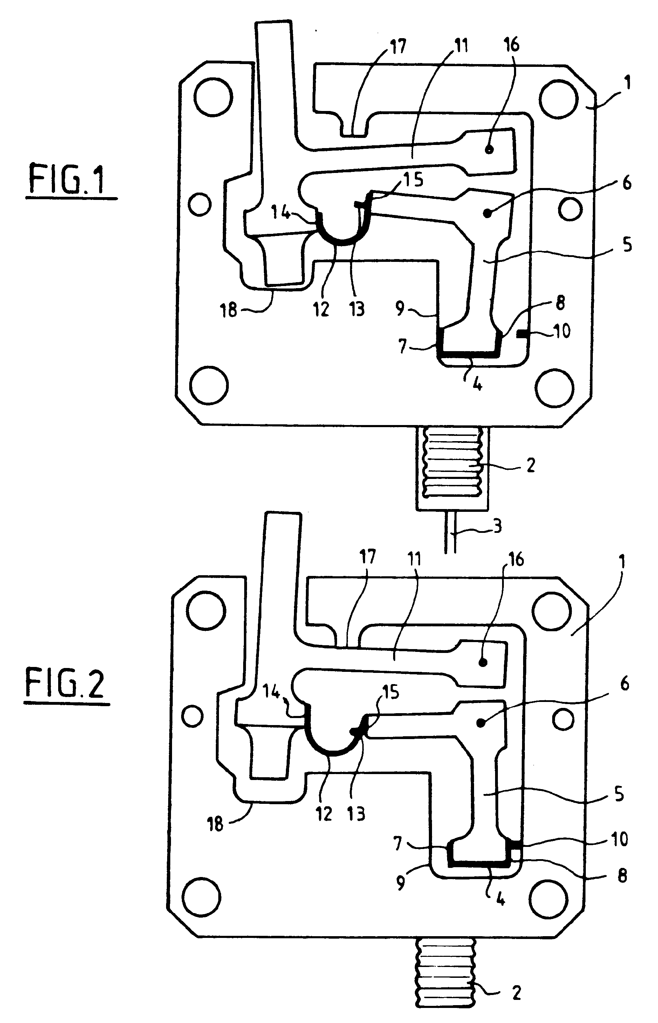

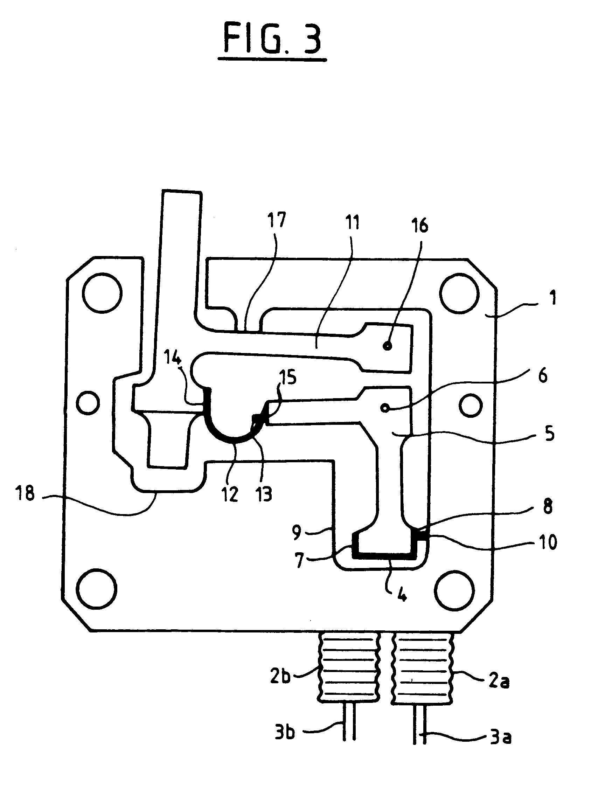

L'invention sera décrite plus en détail en référence aux figures dans lesquelles :
. La figure 1 représente le dispositif de commutation optique de l'invention, le composant optique étant dans sa position active.
. La figure 2 représente la même vue en coupe du dispositif de l'invention, le composant optique étant dans sa position inactive.
. La figure 3 représente le dispositif de l'invention dans une variante où il constitue un inverseur.

Le dispositif de l'invention comporte un boîtier 1 et des moyens de fixation 2 d'une fibre optique 3 par rapport à ce boîtier. De manière traditionnelle le boîtier peut être en matière plastique ou en métal choisi en fonction de l'ambiance dans laquelle l'utilisation du dispositif de commutation est envisagé. En règle générale, il assure la rigidité et la stabilité dimensionnelle de l'ensemble.

Un composant optique 4 peut selon l'état du commutateur être dans l'une ou l'autre de deux positions stables. Dans la première de ces positions stables il est actif, au contraire dans l'autre il est inactif.

On entend ici par actif le fait qu'il participe à une combinaison optique qui permet qu'un flux lumineux codé de façon à être porteur d'informations qui entre dans le dispositif de l'invention en ressort.

Au contraire, lorsqu'il est inactif le flux entrant n'est pas transmis, il ne ressort pas du dispositif.

L'état actif peut correspondre au couplage de deux fibres par le composant optique qui est alors soit une lentille soit un miroir ou de manière préféré le renvoi du signal émis par une fibre dans cette même fibre. Le composant optique est alors un système catadioptrique.

Dans le mode réalisation particulier représenté sur les figures 1 et 2, le commutateur remplit sa fonction par rapport à une seule fibre optique 3. Le composant optique 4 est un élément catadioptrique qui lorsqu'il est actif (figure 1) renvoie le signal lumineux éventuellement transmis par la fibre 3 dans cette même fibre.

Lorsqu'il est en position inactive (figure 2), le flux lumineux transmis par la fibre 3 n'est pas réémis.

De manière analogue, le dispositif de commutation peut être relié à deux fibres optiques, l'élément réfléchissant renvoyant le flux transmis par l'une des fibres vers l'autre lorsqu'il est dans sa position active.

Afin de réaliser un système de transmission d'information plus fiable, (figure 3) il est également possible d'envisager que le dispositif de commutation soit relié à deux fibres 3a, 3b qui chacune sont susceptibles d'émettre et de recevoir un flux lumineux. L'élément optique mobile est un système catadioptrique ; lorsque l'élément optique 4 est actif par rapport à l'une 3a des fibres, il est inactif par rapport à l'autre 3b et inversement. Ainsi, l'élément optique 4 étant toujours actif par rapport à l'une des fibres 3a, 3b par rapport à l'une seulement, le dispositif de l'invention fonctionne en inverseur, sa fiabilité et même celle de l'ensemble du système auquel il est incorporé peut être assurée. Une telle disposition permet de vérifier que le fonctionnement du système ne présente pas de défaillance.

L'élément optique 4 peut également comporter deux éléments catadioptriques distincts chacun destiné à coopérer avec l'une des fibres 3 lorsque le flux émis par celle-ci doit être réfléchi.

Dans un mode de réalisation particulier, l'élément optique fonctionne par transmission. En position active il transmet le flux lumineux émis par une fibre vers l'autre, au contraire en position inactive le flux lumineux émis par la fibre émettrice n'est pas transmis à la fibre réceptrice.

L'élément optique est porté par une pièce mobile dont le mouvement assure son passage de la position active à la position inactive. Cette pièce, appelée deuxième pièce mobile 5 est mobile en rotation autour d'un axe 6 sensiblement perpendiculaire à la direction de la fibre à son point de jonction avec le boîtier 1. Cette deuxième pièce mobile est rigide, elle peut être réalisée en matière plastique ou en métal. Elle comporte des éléments ou parties résistantes 7, 8 destinées à coopérer avec des butées 9, 10 placées de part et d'autre de cette pièce. Et définissant ses positions d'équilibre stables.

Ainsi, les positions géométriques stables de cette deuxième pièce mobile sont définies avec précision par l'axe 6 et les butées 9 et 10. L'élément optique 4 est donc positionné avec une bonne précision dans ces deux positions. Aucun de ces éléments n'est susceptible de subir d'usure ou de fatigue même lorsqu'un très grand nombre de mouvements de cette deuxième pièce mobile est réalisé. Le mouvement de cette deuxième pièce mobile 5 est obtenu par une action extérieure sur une première pièce mobile 11. Cette première pièce mobile 11 est reliée à la deuxième pièce mobile 5 par l'intermédiaire d'une lame élastique 12 de forme approximativement semi-circulaire. Chacune des pièces mobiles 5,11 est liée à la lame élastique 12 au voisinage de l'une des extrémités du demi-cercle. Le point d'application de cette lame élastique 12 sur la deuxième pièce mobile est référencée 13, son point d'application sur la première pièce mobile est référencé 14.

D'une manière en soi connue, lorsque le point d'application de la lame élastique 12 sur la première pièce mobile 11 est déplacé d'un côté de la droite joignant l'axe de rotation 6 de la deuxième pièce mobile 5 au point d'application 13 de la lame élastique 12 avec cette même deuxième pièce mobile 5, à l'autre, la pièce mobile 5 initialement soumise par l'effet de la lame élastique 12 à une force de rotation dans un sens est soumise à une force de sens contraire.

Ainsi en se référant aux figures, lorsque le point 14 est au-dessus de la ligne joignant les points 13 et 6, la deuxième pièce mobile 5 est appliquée contre la butée 10. Au contraire, lorsque le point 14 est abaissé par le mouvement de la première pièce mobile 11 en-dessous de la ligne joignant le point 13 au point 6, la pièce mobile 5 est appliquée par l'effet de la lame élastique 12 contre la butée 9.

De préférence, afin d'assurer un fonctionnement souple du dispositif, la liaison au point 13 entre la lame élastique 12 et la deuxième pièce mobile 5 est réalisée à l'aide d'un ergot 15 porté par la deuxième pièce mobile 5 qui s'engage dans une ouverture 16 prévue à cet effet dans la lame élastique 12.

Dans le mode de réalisation représenté sur les figures, la première pièce mobile 11 est engendré par une action extérieure qui peut être soit une action manuelle soit une action de type électromagnétique ou tout autre moyen de commande choisi en fonction de l'utilisation souhaitée du dispositif de commutation.

Le rôle de cette première pièce mobile est d'assurer le déplacement de l'extrémité 14 de la lame élastique comme exposé plus haut. Tout moyen susceptible de réaliser ce déplacement peut être utilisé. En particulier, le mouvement de cette première pièce mobile 11 peut être un mouvement de translation de préférence sensiblement perpendiculaire à la droite joignant l'axe d'articulation 6 au point 13 de jonction entre la lame élastique 12 et la deuxième pièce mobile 5.

On obtient un dispositif particulièrement simple lorsque les butées 9, 10, 17, 18 coopérant aussi bien avec la deuxième pièce mobile qu'avec la première font partie intégrante du boîtier 1 lui-même. De préférence, la butée correspondant à la position active de l'élément optique 4 sera réglable. Elle peut par exemple être constituée dune vis munie d'un contre-écrou coopérant avec un filetage solidaire du boîtier. Lors du fonctionnement du dispositif de commutation de l'invention seule la lame élastique 12 subit des déformations. Elle ne contribue pas à la définition de la position du composant actif ni dans sa position active ni dans sa position inactive. Au contraire, tous les éléments contribuant à définir ces positions sont rigides et subissent des usures ou des fatigues restreintes.

De préférence, dans le cas où l'élément optique 4 est un élément catadioptrique, il sera de préférence choisi de manière à permettre la plus grande tolérance en position active entre cet élément optique et la ou les fibres optiques avec lesquelles il coopère. Le film commercialisé sous la dénomination "SCOTHLITE" par la société "3M" est bien adapté à cet usage.

Le boîtier 1 est destiné à être fermé après montage ne laissant apparaître que l'élément de commande de la première pièce mobile 11 lorsque celle-ci est nécessaire assurant ainsi la protection de l'ensemble.

## Revendications

1. Dispositif de commutation optique bistable dans lequel un composant optique (4) peut être déplacé d'une position d'équilibre stable à une autre, par rapport à au moins une fibre optique (3), par l'action d'une première pièce mobile (11), le composant optique (4) étant actif dans l'une des positions stables et inactif dans l'autre, du type comportant :
- un boîtier (1) ;
- des moyens de fixation (2) des fibres optiques (3) sur le boîtier (1) ;
- une deuxième pièce mobile (5) par rapport au boîtier (1) et portant le composant optique (4) ;
- une lame élastique (12) de forme approximativement semi-circulaire reliant la première pièce mobile (15) à la deuxième (14), chacune d'elles étant liée à la lame élastique (12) au voisinage de l'une des extrémités du demi-cercle.
caractérisé en ce que la deuxième pièce mobile (5 ) est mobile par rapport à un premier axe de rotation (6) solidaire du boîtier (1), qu'elle est rigide et constitue un élément distinct de la lame élastique (12).

2. Dispositif selon la revendication 1, caractérisé en ce qu'il comporte deux deuxièmes butées (9, 10) solidaires du boîtier 1, situées de part et d'autre de la deuxième pièce mobile (5) et définissant les positions d'équilibre stable de cette pièce (5).

3. Dispositif selon l'une quelconque des revendications 1 et 2, caractérisé en ce que la première pièce mobile (11) est mobile en rotation par rapport à un deuxième axe de rotation (16) solidaire du boîtier (1).

4. Dispositif selon la revendication 3, caractérisé en ce qu'il comporte deux premières butées (17, 18) situées de part et d'autre de la première pièce mobile (11) et limitant ses déplacements.

5. Dispositif selon la revendication 1, caractérisé en ce que l'élément optique (4) est de type catadioptrique renvoyant dans l'une de ses positions d'équilibre de la première pièce mobile (11) le flux reçu de la fibre (3) dans celle-ci.

6. Dispositif selon l'une quelconque des revendications 1 ou 2, caractérisé en ce qu'il comporte des moyens de fixation (2a, 2b) de deux fibres optiques (3a, 3b) par rapport au boîtier (1), l'élément optique (4) renvoyant dans chacune de ses positions d'équilibre le flux émis de l'une des fibres (3) dans cette même fibre (3).

7. Dispositif selon la revendication 6, caractérisé en ce que l'élément optique (4) comporte deux éléments catadioptriques, chacun étant destiné à coopérer avec l'une des fibres (3), lorsque le flux émis par celle-ci doit être réfléchi.

8. Dispositif selon l'une quelconque des revendications 1 à 5, caractérisé en ce que les premières et deuxièmes butées (9, 10, 17, 18) sont constituées par des protubérances prévues à cet effet dans le corps du boîtier (1).

9. Dispositif selon l'une quelconque des revendications 1 à 5, caractérisé en ce que l'une au moins des premières butées est constituée par une vis solidaire du boîtier et constituant une butée réglable.

10. Dispositif selon l'une quelconque des revendications 1 à 9, caractérisé en ce que la première pièce mobile (11) comporte un poussoir destiné à recevoir une action extérieure manuelle.

11. Dispositif selon l'une quelconque des revendications 1 à 9, caractérisé en ce que la première pièce mobile (11) comporte un élément destiné à recevoir une action extérieure électromagnétique.

## Patentansprüche

1. Bistabile optische Schaltvorrichtung, bei der eine optische Komponente (4) in Bezug auf wenigstens eine optische Faser (3) mittels eines ersten bewegbaren Teils (11) aus einer stabilen Gleichgewichtsposition in eine andere verschiebbar ist, wobei die optische Komponente (4) in einer der stabilen Positionen aktiv und in der anderen inaktiv ist, mit:
- einem Gehäuse (1);
- Einrichtungen (2) zum Befestigen von optischen Fasern (3) an dem Gehäuse (1);
- einem zweiten, in Bezug auf das Gehäuse (1) bewegbaren Teil (5), welches die optische Komponente (4) trägt;
- einem ungefähr halbkreisförmigen elastischen Streifen (12), der das erste bewegbare Teil (11) mit dem zweiten (5) verbindet, wobei jedes der Teile in der Nähe eines der Enden des Halbkreises mit dem elastischen Streifen (12) verbunden ist:
dadurch gekennzeichnet, daß das zweite bewegbare Teil (5) in Bezug auf eine mit dem Gehäuse (1) einstückige erste Drehachse (6) bewegbar ist, daß es starr ist und ein von dem elastischen Streifen (12) unterschiedliches Element bildet.

2. Vorrichtung nach Anspruch 1, dadurch gekennzeichnet, daß sie zwei mit dem Gehäuse (1) einstückige zweite Anschläge (9, 10) aufweist, die auf beiden Seiten des zweiten bewegbaren Teils (5) angeordnet sind und die stabilen Gleichgewichtspositionen dieses Teils (5) definieren.

3. Vorrichtung nach einem der Ansprüche 1 oder 2, dadurch gekennzeichnet, daß das erste bewegbare Teil (11) drehend in Bezug auf eine mit dem Gehäuse (1) einstückige zweite Drehachse (16) bewegbar ist.

4. Vorrichtung nach Anspruch 3, dadurch gekennzeichnet, daß sie zwei erste Anschläge (17, 18) aufweist, die auf beiden Seiten des ersten bewegbaren Teils (11) angeordnet sind und dessen Verschiebung begrenzen.

5. Vorrichtung nach Anspruch 1, dadurch gekennzeichnet, daß das optische Element (4) vom katadioptrischen Typ ist, der in einer der Gleichgewichtspositionen des ersten bewegbaren Teils (11) den von der Faser (3) empfangenen Fluß in diese zurückleitet.

6. Vorrichtung nach einem der Ansprüche 1 oder 2, dadurch gekennzeichnet, daß sie Vorrichtungen (2a, 2b) zum Befestigen von zwei optischen Fasern (3a, 3b) in Bezug auf das Gehäuse (1) aufweist, wobei das optische Element (4) in jeder seiner Gleichgewichtspositionen den von einer der Fasern (3) emittierten Fluß in dieselbe Faser (3) zurückleitet.

7. Vorrichtung nach Anspruch 6, dadurch gekennzeichnet, daß das optische Element (4) zwei katadioptrische Elemente aufweist, die jeweils zum Zusammenwirken mit einer der Fasern (3) bestimmt sind, wenn der von dieser emittierte Fluß reflektiert werden soll.

8. Vorrichtung nach einem der Ansprüche 1 bis 5, dadurch gekennzeichnet, daß die ersten und zweiten Anschläge (9, 10, 17, 18) aus zu diesem Zweck am Körper des Gehäuses (1) vorgesehenen Vorsprüngen gebildet sind.

9. Vorrichtung nach einem der Ansprüche 1 bis 5, dadurch gekennzeichnet, daß wenigstens einer der ersten Anschläge aus einer mit dem Gehäuse (1) einstückigen Schraube besteht und einen einstellbaren Anschlag bildet.

10. Vorrichtung nach einem der Ansprüche 1 bis 9, dadurch gekennzeichnet, daß das erste bewegbare Teil (11) eine Stelleinrichtung zum Aufnehmen einer externen manuellen Kraft aufweist.

11. Vorrichtung nach einem der Ansprüche 1 bis 9, dadurch gekennzeichnet, daß das erste bewegbare Teil (11) ein Element zur Aufnahme einer externen elektromagnetischen Kraft aufweist.

## Claims

1. Bistable optical switching device, in which an optical component (4) can be moved from one stable balanced position to another in relation to at least one optical fibre (3) by the action of a first moving piece (11), the optical component (4) being operative in one of the stable positions and inoperative in the other, of the type comprising:
- a casing (1) ;
- means (2) for fixing the optical fibres (3) to the casing (1) ;
- a second piece (5) which moves in relation to the casing (1) and which carries the optical component (4);
- a spring clip (12) approximately semi-circular in shape which links the first moving piece (11) to the second ( 5 ), these two pieces (11,5 ) each being linked to the spring clip (12) in the area around one of the ends of the half-circle,
characterized in that the second moving piece (5) can move in relation to a first axis of rotation (6) integral with the casing (1), and in that said second moving piece (5) is rigid and forms a separate element from the spring clip (12).

2. Device according to claim 1, characterized in that it comprises two second end stops (9, 10) integral with the casing (1), said second end-stops (9, 10) being located each side of the second moving piece (5) and defining the stable balanced positions of this piece (5).

3. Device according to either of claims 1 and 2, characterized in that the first moving piece (11) can pivot in relation to a second axis of rotation (16) integral with the casing (1).

4. Device according to claim 3, characterized in that it comprises two first end stops (17, 18) located each side of the first moving piece (11) and which limit the displacements thereof.

5. Device according to claim 1, characterized in that the optical element (4) is catadioptric and in that in one of the balanced positions of the first moving piece (11), said optical element reflects the flux received from the fibre (3) back into this same fibre.

6. Device according to either one of claims 1 and 2, characterized in that it comprises means (2a, 2b) for fixing two optical fibres (3a, 3b) in relation to the casing (1) and in that the optical element (4), in each of its balanced positions, reflects the flux emitted by one of the fibres (3) back into this same fibre (3).

7. Device according to claim 6, characterized in that the optical element (4) comprises two catadioptric elements, each intended to work with one of the fibres (3) when the flux emitted by said fibre is to be reflected back into this same fibre.

8. Device according to any one of claims 1 to 5, characterized in that the first and second end stops (9, 10, 17, 18) are formed from protuberances specifically made for this purpose in the body of the casing (1).

9. Device according to any one of claims 1 to 5, characterized in that at least one of the first end stops is formed by a screw which is integral with the casing and forms an adjustable end stop.

10. Device according to any one of claims 1 to 9, characterized in that the first moving piece (11) comprises a pushbutton intended to be manually activated from outside the casing.

11. Device according to any one of claims 1 to 9, characterized in that the first moving piece (11) comprises an element intended to receive an external electromagnetic action.
